# FASCICULE DE BREVET EUROPEEN

(11) **EP 2 845 685 B1**
(45) Date de publication et mention de la délivrance du brevet: **08.06.2016**
(21) Numéro de dépôt: 14179875.1
(22) Date de dépôt: 05.08.2014
(51) Int. Cl.: B25D 11/00, H02K 7/06, B25B 27/10, B25B 27/14

(54) **Dispositif de détection de présence d'un outil amovible d'un actionneur linéaire**
Präsenzerkennungsvorrichtung eines entfernbaren Werkzeugs von einem linearen Stellglied
Device for detecting the presence of a removable tool of a linear actuator

(30) Priorité: 20.08.2013 FR 1358088
(43) Date de publication de la demande: 11.03.2015
(73) Titulaire: Virax, 51200 Epernay (FR)
(72) Inventeur: Da Rocha, Franck, 51500 Puisieulx (FR)
(74) Mandataire: Blot, Philippe Robert Emile

(56) Documents cités:
- DE-A1-102008 024 018
- FR-A1- 2 873 514

## Description

La présente invention concerne un actionneur linéaire adapté pour recevoir un outil amovible et comportant des moyens d'entraînement d'un équipage mobile pour actionner l'outil, commandés par un module électronique.

L'invention s'applique à des actionneurs linéaires, notamment électro-mécaniques, destinés à recevoir un outil amovible. L'outil est actionné par un équipage mobile de l'actionneur. Par exemple, un tel outil est un outil de travail de tubes.

Il est généralement nécessaire de détecter l'arrivée en bout de course de l'équipage mobile, sous peine d'endommager l'actionneur.

FR-A-2 873 514 décrit un actionneur linéaire propre à recevoir un outil amovible selon la préambule de la revendication 1, l'outil étant actionné par une vis entraînée en translation par un moteur électrique dans les deux sens le long de son axe, désignés par avant et arrière. Cet actionneur comporte des capteurs, en l'occurrence des capteurs à effet Hall, pour détecter le passage d'un marqueur solidaire de la vis, en l'occurrence un aimant, et permettre l'arrêt du moteur lorsque la vis arrive en bout de course avant et/ou arrière.

Néanmoins, un tel actionneur ne donne pas entière satisfaction. En effet, la présence des capteurs se traduit par des coûts de fabrication supplémentaires et augmente l'encombrement et le poids de l'actionneur.

Un but de l'invention est de proposer un actionneur dont le nombre de capteurs est réduit.

A cet effet, l'invention a pour objet un actionneur du type précité selon la revendication 1.

En effet, l'interruption du fonctionnement des moyens d'entraînement à l'issue de la première durée prédéterminée empêche la mise en butée de l'équipage mobile lorsqu'aucune contrainte mécanique induite par la présence d'un outil n'est détectée.

Suivant des modes particuliers de réalisation, l'invention présente l'une ou plusieurs des caractéristiques suivantes, prise(s) isolément ou suivant toute combinaison techniquement possible :
- le module électronique est propre à commander les moyens d'interruption du fonctionnement des moyens d'entraînement si ladite dérivée n'excède pas une deuxième valeur prédéterminée pendant la première durée prédéterminée à partir du début de l'entraînement de l'équipage mobile.
- lesdits moyens d'entraînement comportent un moteur électrique, et ladite grandeur est l'intensité instantanée du courant d'alimentation du moteur.
- le module électronique comprend des moyens pour mettre en route lesdits moyens d'entraînement automatiquement à l'issue d'une deuxième durée prédéterminée après l'interruption de leur fonctionnement par lesdits moyens d'interruption, pour ramener l'équipage mobile dans une position initiale de repos.
- l'actionneur est alimenté par une batterie.
- le module électronique comprend des moyens pour modifier ladite première durée prédéterminée en fonction du niveau de charge de la batterie.

L'invention sera mieux comprise à l'aide de la description qui va suivre, donnée uniquement à titre d'exemple et faite en se référant aux dessins annexés sur lesquels :
- la figure 1 est une représentation schématique d'un actionneur selon l'invention ;
- la figure 2 est un schéma synoptique du module électronique de l'actionneur de la figure 1 ;
- la figure 3 est un graphe représentant des courbes de l'intensité consommée par l'actionneur de la figure 1 et de la dérivée temporelle de cette intensité.

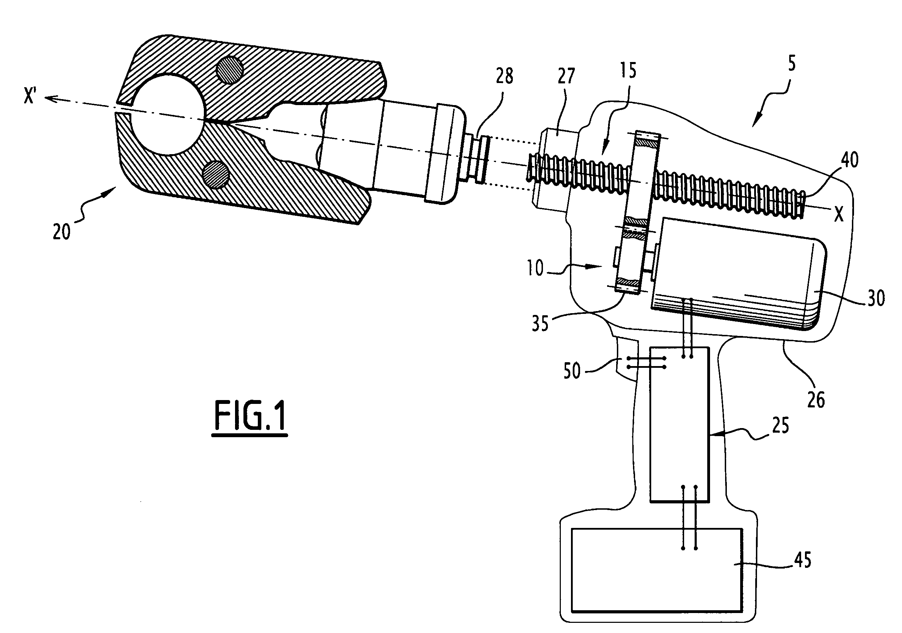

Comme cela apparaît sur la figure 1, un actionneur 5 linéaire comporte des moyens 10 d'entraînement d'un équipage mobile 15 le long d'un axe longitudinal X-X' pour actionner un outil 20 amovible.

Les moyens 10 sont commandés par un module électronique 25. Les moyens 10, l'équipage mobile 15 et le module électronique 25 sont disposés dans un corps 26 de l'actionneur 5.

L'actionneur 5 comporte des moyens de fixation 27 propres à coopérer avec des moyens de fixation 28 de l'outil 20 pour fixer solidairement l'outil 20 à l'actionneur 5 de façon amovible.

L'outil 20 est par exemple un outil de travail de tubes.

Par exemple, les moyens 10 sont formés par un moteur électrique 30, par exemple un moteur à courant continu, et un réducteur 35.

Par exemple, l'équipage mobile 15 est une vis 40 s'étendant selon l'axe longitudinal X-X'. La vis 40 est entraînée en translation le long de l'axe X-X' par le moteur 30, par l'intermédiaire du réducteur 35, entre une position reculée, représentée sur la figure 1, et une position avancée de la vis 40 hors du corps 26 de l'actionneur 5.

Le module électronique 25 contrôle en particulier l'alimentation électrique du moteur 30 fournie par une source d'alimentation, par exemple une batterie 45.

L'actionneur 5 possède également un interrupteur manuel 50 pour permettre à l'utilisateur de mettre en fonctionnement l'actionneur 5. De préférence, à la mise en fonctionnement, la vis 40 est en position reculée.

L'interrupteur manuel 50 est connecté au module électronique 25.

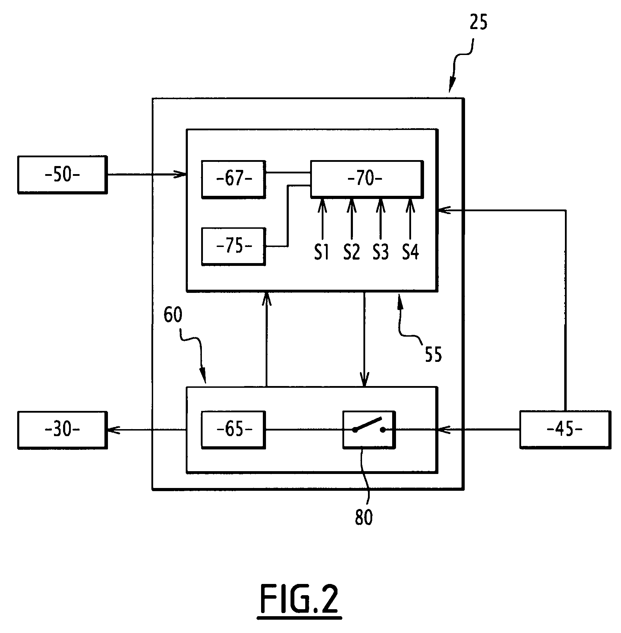

Comme cela apparaît sur la figure 2, le module électronique 25 comporte un module de commande 55 connecté à un module de puissance 60.

Le module de puissance 60 assure la gestion de l'alimentation électrique du moteur 30 et est interposé entre la batterie 45 et le moteur 30.

Le module de puissance 60 comprend des moyens 65 d'acquisition de l'intensité instantanée du courant d'alimentation du moteur 30.

L'interrupteur 50 est connecté au module de commande 55.

Le module de commande 55 comporte des moyens 67 de calcul de la dérivée par rapport au temps de l'intensité du courant d'alimentation.

Le module de commande 55 comporte également une horloge 75 pour mesurer le temps écoulé depuis la mise en fonctionnement de l'actionneur linéaire par le biais de l'interrupteur manuel 50.

Le module de commande 55 comporte en outre des moyens 70 de comparaison de l'intensité du courant d'alimentation à une première valeur prédéterminée S1 et de la dérivée par rapport au temps de l'intensité du courant d'alimentation à une deuxième valeur prédéterminée S2, pour actionner un interrupteur principal 80 de coupure de l'alimentation du moteur 30 si l'intensité du courant d'alimentation, respectivement sa dérivée par rapport au temps, ne dépasse pas la première valeur prédéterminée S1, respectivement la deuxième valeur prédéterminée S2, à l'issue d'une première durée prédéterminée T1 depuis la mise en fonctionnement de l'actionneur 5.

De préférence, la première durée prédéterminée T1 dépend du niveau de charge de la batterie 45. Par exemple, la première durée prédéterminée T1 est une fonction linéaire décroissante de la charge de la batterie 45, pour compenser la baisse de puissance fournie par la batterie 45 au cours de sa décharge.

Les moyens 70 de comparaison sont également propres à comparer l'intensité du courant d'alimentation à une troisième valeur prédéterminée S3 et de la dérivée de l'intensité du courant d'alimentation à une quatrième valeur prédéterminée S4 pour actionner l'interrupteur principal 80 de coupure de l'alimentation du moteur 30 si l'intensité du courant d'alimentation, respectivement sa dérivée par rapport au temps, excède la troisième valeur prédéterminée S3, respectivement la quatrième valeur prédéterminée S4.

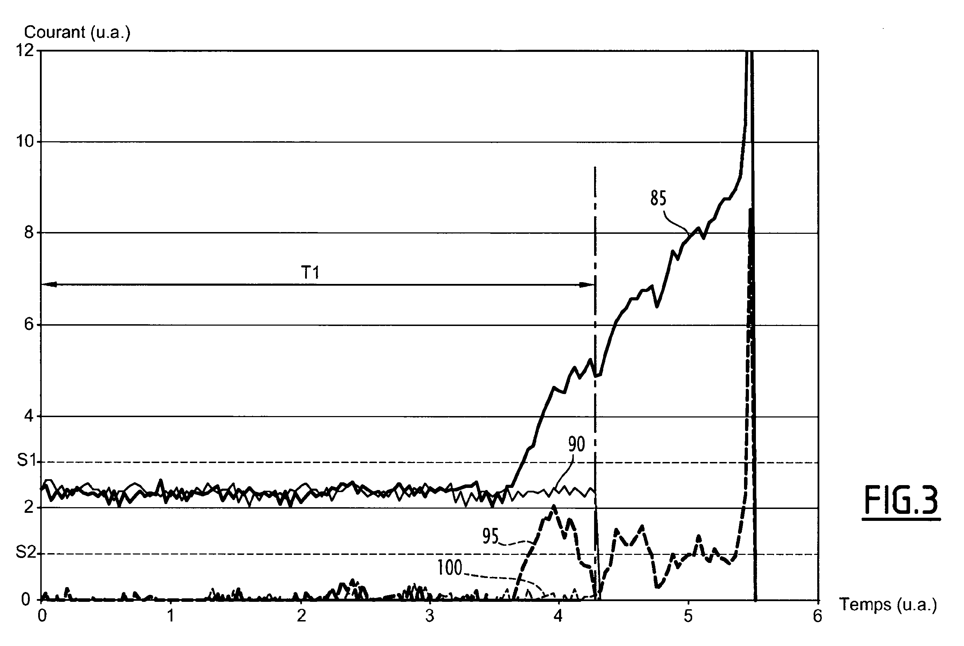

Le fonctionnement de l'actionneur 5 va être explicité en relation avec la figure 3.

La figure 3 représente la variation au cours du temps du courant d'alimentation du moteur 30 à partir de la mise en fonctionnement de l'actionneur 5 par l'interrupteur manuel 50, dans le cas où l'actionneur 5 est équipé de l'outil 20, courbe 85, et dans le cas où l'actionneur 5 est dépourvu d'outil 20, courbe 90. Dans un moteur électrique à courant continu, l'intensité du courant d'alimentation du moteur et l'effort fourni par celui-ci étant proportionnels l'un à l'autre, les courbes 85 et 90 sont bien représentatives de l'effort fourni par le moteur 30.

La figure 3 représente également les dérivées par rapport au temps des courants correspondant aux courbes 85 et 90, respectivement les courbes 95 et 100.

Lorsque l'actionneur 5 est équipé de l'outil 20 et qu'il est mis en fonctionnement, la vis 40 progresse hors du corps 26 de l'actionneur 5 vers l'outil 20. La vis 40 entre en contact avec une partie de l'outil 20. Le moteur 30 fournit un effort supplémentaire pour actionner l'outil 20, ce qui se traduit par une augmentation du courant d'alimentation du moteur 30 et une variation de sa dérivée par rapport au temps, comme cela apparaît sur les courbes 85 et 90 respectivement, à partir de 3,6 unités de temps.

Par exemple, quand l'intensité du courant d'alimentation du moteur 30, ou la valeur de sa dérivée, dépasse la troisième valeur prédéterminée S3, respectivement la quatrième valeur prédéterminée S4, les moyens de comparaison 70 actionnent l'interrupteur principal 80.

Lorsque l'actionneur 5 est dépourvu de l'outil 20 et qu'il est mis en fonctionnement, de la même façon que précédemment, la vis 40 progresse hors du corps 26 de l'actionneur 5, de X vers X'. L'outil 20 étant absent, le moteur 30 fournit un effort sensiblement constant au cours du temps pour faire progresser la vis 40, comme cela apparaît sur la courbe 90 où le courant d'alimentation du moteur 30 est sensiblement constant et inférieur à la première valeur prédéterminée S1 dans l'intervalle compris entre 0 unité de temps et 4,3 unités de temps. La dérivée de l'intensité du courant d'alimentation est sensiblement nulle, et donc inférieure à la deuxième valeur prédéterminée S2, au cours de cet intervalle, comme le montre la courbe 100.

A l'issue de la première durée prédéterminée T1, par exemple 4,3 unités de temps sur la figure 3, l'interrupteur principal 80 est actionné et l'alimentation du moteur 30 est interrompue. En effet, pendant la première durée prédéterminée T1, le courant d'alimentation est resté inférieur à la première valeur prédéterminée S1 et la dérivée par rapport au temps de ce courant est restée inférieure à la deuxième valeur prédéterminée S2.

Avantageusement, à l'issue d'une deuxième durée prédéterminée T2 après l'actionnement de l'interrupteur principal 80, le moteur 30 est automatiquement mis en route pour ramener la vis 40 dans sa position reculée telle qu'illustrée par la figure 1.

Par exemple, la deuxième durée prédéterminée T2 est comprise entre 0 s et 2 s.

En variante, l'interrupteur principal 80 est actionné si, pendant la première durée prédéterminée T1, la dérivée par rapport au temps du courant d'alimentation du moteur 30 est restée inférieure à la deuxième valeur prédéterminée S2, quelle que soit la valeur de ce courant.

Selon un autre mode de réalisation (non représenté) d'un actionneur selon l'invention, les moyens d'entraînement 10 comportent des moyens hydrauliques, par exemple un vérin. Le module électronique 25 comporte par exemple des moyens d'acquisition d'une grandeur dépendant de l'effort instantané fourni par le vérin, par exemple la pression du fluide d'alimentation du vérin.

## Revendications

1. Actionneur (5) linéaire adapté pour recevoir un outil (20) amovible et comportant des moyens (10) d'entraînement d'un équipage mobile (15) pour actionner l'outil (20), commandés par un module électronique (25),
**caractérisé en ce que** le module électronique (25) comporte des moyens d'acquisition (65, 67) d'une grandeur représentative de l'effort instantané fourni par les moyens (10) d'entraînement, et/ou de la dérivée par rapport au temps de cette grandeur, et **en ce que** le module électronique (25) est propre à commander des moyens (80) d'interruption du fonctionnement des moyens (10) d'entraînement si ladite grandeur n'excède pas une première valeur prédéterminée (S1) pendant une première durée prédéterminée (T1) à partir du début de l'entraînement de l'équipage mobile (15), et/ou si ladite dérivée n'excède pas une deuxième valeur prédéterminée (S2) pendant la première durée prédéterminée (T1) à partir du début de l'entraînement de l'équipage mobile (15).

2. Actionneur (5) selon la revendication 1, **caractérisé en ce que** le module électronique (25) est propre à commander les moyens (80) d'interruption du fonctionnement des moyens (10) d'entraînement si ladite dérivée n'excède pas une deuxième valeur prédéterminée (S2) pendant la première durée prédéterminée (T1) à partir du début de l'entraînement de l'équipage mobile (15).

3. Actionneur (5) selon la revendication 1 ou 2, **caractérisé en ce que** lesdits moyens (10) d'entraînement comportent un moteur électrique (30), et **en ce que** ladite grandeur est l'intensité instantanée du courant d'alimentation du moteur (30).

4. Actionneur (5) selon l'une quelconque des revendications précédentes, **caractérisé en ce que** le module électronique (25) comprend des moyens pour mettre en route lesdits moyens (10) d'entraînement automatiquement à l'issue d'une deuxième durée prédéterminée (T2) après l'interruption de leur fonctionnement par lesdits moyens (80) d'interruption, pour ramener l'équipage mobile (15) dans une position initiale de repos.

5. Actionneur (5) selon l'une quelconque des revendications précédentes, **caractérisé en ce qu'**il est alimenté par une batterie (45).

6. Actionneur (5) selon la revendication 5, **caractérisé en ce que** le module électronique (25) comprend des moyens pour modifier ladite première durée prédéterminée (T1) en fonction du niveau de charge de la batterie (45).

## Patentansprüche

1. Linearer Aktuator (5), der zur Aufnahme eines lösbares Werkzeugs (20) ausgebildet ist und Antriebsmittel (10) einer beweglichen Ausrüstung (15) zur Betätigung eines Werkzeugs (20) aufweist, die von einem elektronischen Modul (25) gesteuert werden,
**dadurch gekennzeichnet, dass** das elektronischen Modul (25) Erfassungsmittel (65, 67) einer repräsentative Größe der von den Antriebsmitteln (10) bereitgestellten momentanen Kraft und/oder der Ableitung in Bezug zur Zeit dieser Größe aufweist, und dass das elektronische Modul (25) imstande ist, Unterbrechungsmittel (80) der Funktion der Antriebsmittel (10) zu steuern, wenn die Größe einen ersten vorbestimmten Wert (S1) während einer ersten vorbestimmten Dauer (T1) ab dem Beginn des Antriebs der beweglichen Ausrüstung (15) nicht überschreitet und/oder wenn die Ableitung einen zweiten vorbestimmten Wert (S2) während der ersten vorbestimmten Dauer (T1) ab dem Beginn des Antriebs der beweglichen Ausrüstung (15) nicht überschreitet.

2. Aktuator (5) nach Anspruch 1, **dadurch gekennzeichnet, dass** das elektronische Modul (25) imstande ist, die Unterbrechungsmittel (80) der Funktion der Antriebsmittel (10) zu steuern, wenn die Ableitung einen zweiten vorbestimmten Wert (S2) während der ersten vorbestimmten Dauer (T1) ab dem Beginn des Antriebs der beweglichen Ausrüstung (15) nicht überschreitet.

3. Aktuator (5) nach Anspruch 1 oder 2, **dadurch gekennzeichnet, dass** die Antriebsmittel (10) einen Elektromotor (30) aufweisen und dass die Größe die momentane Stärke des Versorgungsstroms des Motors (30) ist.

4. Aktuator (5) nach einem der vorangehenden Ansprüche, **dadurch gekennzeichnet, dass** das elektronische Modul (25) Mittel umfasst, um die Antriebsmittel (10) nach Ablauf einer zweiten vorbestimmten Dauer (T2) nach Unterbrechung ihrer Funktion durch die Unterbrechungsmittel (80) automatisch ingangzusetzen, um die bewegliche Ausrüstung (15) in eine Ausgangs-Ruhestellung zu führen.

5. Aktuator (5) nach einem der vorangehenden Ansprüche, **dadurch gekennzeichnet, dass** er von einer Batterie (45) versorgt wird.

6. Aktuator (5) nach Anspruch 5, **dadurch gekennzeichnet, dass** das elektronische Modul (25) Mittel umfasst, um die erste vorbestimmte Dauer (T1) in Abhängigkeit vom Ladezustand der Batterie (45) zu ändern.

## Claims

1. A linear actuator (5) adapted to receive a removable tool (20), and including drive means (10) for driving a movable component assembly (15) for actuating the tool (20), controlled by an electronic module (25),
**characterised in that** the electronic module (25) comprises acquisition means (65, 67) for acquiring a variable that is representative of the instantaneous force supplied by the drive means (10) and / or the time derivative of this variable, and **in that** the electronic module (25) is capable of controlling interruption means (80) for interrupting the operation of the drive means (10) if the said variable does not exceed a first predetermined value (S1) during a first predetermined time period (T1) from the start of the driving of the movable component assembly (15), and / or if the said derivative does not exceed a second predetermined value (S2) during the first predetermined time period (T1) from the start of the driving of the movable component assembly (15).

2. An actuator (5) according to claim 1, **characterised in that** the electronic module (25) is capable of controlling the interruption means (80) for interrupting the operation of the drive means (10) if the said derivative does not exceed a second predetermined value (S2) during the first predetermined time period (T1) from the start of the driving of the movable component assembly (15).

3. An actuator (5) according to claim 1 or 2, **characterised in that** the said drive means (10) comprise an electric motor (30), and **in that** the said variable is the instantaneous intensity of the power supply current of the motor (30).

4. An actuator (5) according to any one of the preceding claims, **characterised in that** the electronic module (25) comprises means for automatically initiating operation of the said drive means (10) at the conclusion of a second predetermined time period (T2) after the interruption of their operation by the said interruption means (80), in order to bring back the movable component assembly (15) into an initial rest position.

5. An actuator (5) according to any one of the preceding claims, **characterised in that** it is powered by a battery (45).

6. An actuator (5) according to claim 5, **characterised in that** the electronic module (25) comprises means for modifying the said first predetermined time period (T1) based on the level of charge of the battery (45).
